# EUROPEAN PATENT APPLICATION

(11) **EP 4 693 549 A1**
(43) Date of publication of application: **11.02.2026**
(21) Application number: 25182871.1
(22) Date of filing: 16.06.2025
(51) Int. Cl.: H01M 10/04, H01M 50/103, H01M 50/209, H01M 50/264, H01M 50/291, H01M 50/293

(54) **BATTERY AND BATTERY MANUFACTURING METHOD**

(30) Priority: 09.08.2024 JP 2024134648
(71) Applicant: TOYOTA JIDOSHA KABUSHIKI KAISHA, Toyota-shi, Aichi-ken 471-8571 (JP)
(72) Inventor: KAGAMI, Ryo, Toyota-shi, Aichi-ken, 471-8571 (JP); KAKISHITA, Kenichi, Toyota-shi, Aichi-ken, 471-8571 (JP)
(74) Representative: Winter, Brandl - Partnerschaft mbB

(57) **Abstract**

A battery includes a battery case in which an electrode laminate is housed and in which a rectangular opening is formed by a pair of short side wall portions and a pair of long side wall portions of the battery case, and at a corner portion of the opening, at least one of the short side wall portions or the long side wall portions is bent for forming a projecting portion that projects toward an outer side of the battery case

## Description

### BACKGROUND

### Technical Field

This disclosure relates to a battery and a battery manufacturing method.

### Related Art

Japanese Patent Application Laid-open (JP-A) No. 2015-092460 discloses a battery including an electrode body and a case that houses an electrode laminate (the electrode body) inside, wherein wall portions of the case are alternately bent inward and outward to thereby provide projecting portions that project inward of the case.

In this battery, the plural projecting portions support linear parts of the electrode body and inhibit positional shifting of the electrode body caused by expansion and contraction when the battery is charged and discharged.

### SUMMARY

However, in the technology disclosed in JP-A No. 2015-092460, when inserting the electrode laminate into the case, the projecting portions provided in the wall portions of the case and the electrode laminate may interfere with each other. Thus, in terms of improving the insertability of the electrode laminate into the case, there is room for improvement.

In consideration of the above circumstances, the present disclosure obtains a battery and a battery manufacturing method that can improve the insertability of an electrode laminate into a battery case and inhibit positional shifting of the electrode laminate housed inside the battery case.

A battery pertaining to a first aspect of the disclosure includes a battery case in which an electrode laminate is housed and in which a rectangular opening is formed by a pair of short side wall portions and a pair of long side wall portions of the battery case, wherein at a corner portion of the opening, at least one of the short side wall portions or the long side wall portions is bent, forming a projecting portion that projects toward an outer side of the battery case.

The battery pertaining to the first aspect includes the battery case in which the rectangular opening is formed by the pair of short side wall portions and the pair of long side wall portions, and the electrode laminate is housed inside the battery case. In the battery case, the projecting portion is formed at the corner portion of the openings by bending at least one of the short side wall portions or the long side wall portions. Furthermore, the projecting portion has a shape of projecting toward an outer side of the battery case. In other words, according to this configuration, the opening of the battery case has, beforehand, an extra-length part for forming the projecting portion at the corner portion of the battery case. When inserting the electrode laminate into the battery case through the opening of the battery case during manufacture, interference between the opening and the electrode laminate is inhibited by the extra-length part that is prepared prior to the formation of the projecting portion. The insertability of the electrode laminate into the battery case can be improved. Furthermore, in a state in which the electrode laminate was housed inside the battery case and the projecting portion has been formed at the corner portion of the open portion of the battery case, the extra-length part disappears and a gap between the side wall portion of the battery case and the electrode laminate is reduced. Positional shifting of the electrode laminate housed inside the battery case can be inhibited.

A battery pertaining to a second aspect of the disclosure is the battery of the first aspect, wherein inner surfaces of the short side wall portions and the long side wall portions that oppose the electrode laminate are configured by flat surfaces.

In the battery pertaining to the second aspect, in the battery case, the inner surfaces of the short side wall portions and the long side wall portions that oppose the electrode laminate are configured by flat surfaces. In a state in which the battery case has the projecting portion and the gap between the side wall portion of the battery case and the electrode laminate has been reduced, the surfaces of the electrode laminate abut against the flat surfaces so that the restraining force toward the electrode laminate is dispersed. Localized restraining force is inhibited from acting on the surfaces of the electrode laminate.

A battery pertaining to a third aspect of the disclosure is the battery of the first aspect or the second aspect, wherein the projecting portions project in the lamination direction of the electrode laminate.

In the battery pertaining to the third aspect, the projecting portion formed at the battery case projects in the lamination direction of the electrode laminate. The restrainment of the electrode laminate housed inside the battery case can be improved in the lamination direction.

A battery pertaining to a fourth aspect of the disclosure is the battery of the first aspect or the second aspect, wherein the projecting portion projects in a direction perpendicular to the lamination direction of the electrode laminate.

In the battery pertaining to the fourth aspect, the projecting portion formed at the battery case projects in a direction perpendicular to the lamination direction of the electrode laminate. The restrainment of the electrode laminate housed inside the battery case can be improved in a direction perpendicular to the lamination direction.

A battery pertaining to a fifth aspect of the disclosure is the battery of any one of the first aspect to the fourth aspect, wherein the projecting portion projects in a direction that forms an angle in a range of 25° to 70° with respect to a lamination direction of the electrode laminate.

In the battery pertaining to the fifth aspect, the projecting portion formed at the battery case projects in a direction that forms an angle in the range of 25° to 70°with respect to the lamination direction of the electrode laminate. The amount that the projecting portion projects in the lamination direction is reduced compared with a configuration in which the projecting portion project parallel to the lamination direction. The dimension of the battery case can be reduced in the lamination direction, and a reduction in size can be achieved.

A battery pertaining to a sixth aspect of the disclosure is the battery of any one of the first aspect to the fifth aspect, wherein in the battery case, a recessed portion that is recessed in a direction perpendicular to the lamination direction is formed adjacent to the projecting portion.

In the battery pertaining to the sixth aspect, the recessed portion that is recessed in a direction perpendicular to the lamination direction is formed adjacent to the projecting portion that projects in the lamination direction. Extra length at the outer periphery of the opening of the battery case can be sufficiently ensured compared with a configuration that does not have the recessed portion. The insertability of the electrode laminate into the battery case can be further improved.

A battery pertaining to a seventh aspect of the disclosure is the battery of any one of the first aspect to the sixth aspect, wherein in the battery case, a recessed portion that is recessed in the lamination direction is formed adjacent to the projecting portion.

In the battery pertaining to the seventh aspect, the recessed portion that is recessed in the lamination direction is formed adjacent to the projecting portion that projects in the lamination direction. Extra length for the battery case can be sufficiently ensured compared with a configuration that does not have the recessed portion. The insertability of the electrode laminate into the battery case can be further improved.

A battery pertaining to an eighth aspect of the disclosure is the battery of any one of the first aspect to the seventh aspect, wherein a wall thickness of the projecting portion is smaller than a wall thickness of other parts of the short side wall portions and the long side wall portions.

In the battery pertaining to the eighth aspect, the wall thickness of the projecting portions is configured to be smaller than the wall thickness of other parts of the short side wall portions and the long side wall portions of the battery case. The bending of the side wall portions when forming the projecting portion can be facilitated compared with a case in which the thickness of the projecting portions is configured to be the same as the other parts of the side wall portions of the battery case.

A battery module pertaining to a ninth aspect of the disclosure is a battery module including a plurality of the batteries of any one of the first aspect to the eighth aspect, the battery module including: a plurality of the battery cases arranged in one direction; elastic bodies disposed between the battery cases; and a pair of restraining members that restrain the plural battery cases from both sides in the one direction, wherein the plural battery cases are arranged such that one of the long side wall portions of each of the battery cases opposes another of the long side wall portions of the adjacent battery case.

The battery module pertaining to the ninth aspect includes a plurality of the battery cases arranged in the one direction, the elastic bodies disposed between the battery cases, and the pair of restraining members that restrain the plural battery cases from both sides in the one direction. Expansion and contraction when the batteries are charged and discharged can be absorbed by deformation of the elastic bodies. The plural battery cases are arranged in the one direction such that one of the long side wall portions of each of the battery cases opposes the other of the long side wall portions of the adjacent battery case. In other words, the restraining pressure applied from the restraining members is input to the plural battery cases via the long side wall portions that are large-area parts of the battery cases. In this configuration, the battery cases have the projecting portions that project toward an outer side of the battery cases at the corner portions of the open portions, so the gaps between the long side wall portions and the electrode laminates are reduced. The restraining pressure is effectively applied from the restraining members to the electrode laminates.

A battery manufacturing method pertaining to a tenth aspect of the disclosure is a method of manufacturing a battery including a battery case in which an electrode laminate is housed and in which a rectangular opening is formed by a pair of short side wall portions and a pair of long side wall portions of the battery case, the method including: inserting the electrode laminate through the opening; and pressing the battery case, bending at least one of the short side wall portions or the long side wall portions, and forming a projecting portion at a corner portion of the opening, the projecting portion projects toward an outer side of the battery case.

In the battery manufacturing method pertaining to the tenth aspect, the electrode laminate is inserted through the rectangular opening, and thereafter the battery case is pressed to form the projecting portion at the corner portion of the opening. In other words, when the electrode laminate is inserted, the opening of the battery case has an extra-length part for forming the projecting portion. Interference between the battery case and the electrode laminate is inhibited, and the insertability of the electrode laminate into the battery case can be improved. Furthermore, in a state in which the electrode laminate was housed inside the battery case and the projecting portion has been formed at the corner portion of the open portion, the gap between the side wall portion of the battery case and the electrode laminate is reduced. A battery in which positional shifting of the electrode laminate housed inside the battery case is inhibited can be obtained.

As described above, the battery and the battery manufacturing method pertaining to the present disclosure can improve the insertability of an electrode laminate into a battery case and inhibit positional shifting of the electrode laminate housed inside the battery case.

### BRIEF DESCRIPTION OF THE DRAWINGS

FIG. 1 is a partial exploded perspective view of a battery module pertaining to an embodiment;
FIG. 2 is a perspective view of a battery pertaining to the embodiment;
FIG. 3 is a cross-sectional view of an electrode laminate schematically showing a state in which the electrode laminate is cut along line 3-3 of FIG. 2;
FIG. 4 is a cross-sectional view of a battery case schematically showing a state in which the battery case is cut along line 4-4 of FIG. 2;
FIG. 5 is a cross-sectional view of the battery case schematically showing a state in which the battery case is cut along line 5-5 of FIG. 4;
FIG. 6 is a partial enlarged cross-sectional view showing an enlargement of a region P indicated by the long dashed short dashed line in FIG. 5;
FIG. 7A is a schematic view describing a battery manufacturing method pertaining to the embodiment and shows a step of inserting the electrode laminate into the battery case;
FIG. 7B is a schematic view describing the battery manufacturing method pertaining to the embodiment and shows a step of interjoining the electrode laminate and inside terminals;
FIG. 7C is a schematic view describing the battery manufacturing method pertaining to the embodiment and shows a step of interjoining a case body of the battery case and terminal wall portions;
FIG. 7D shows a step of pressing the battery case;
FIG. 8 is a partial enlarged cross-sectional view corresponding to FIG. 6 and shows a first example modification of the battery of the embodiment;
FIG. 9 is a partial enlarged cross-sectional view corresponding to FIG. 6 and shows a second example modification of the battery of the embodiment;
FIG. 10 is a partial enlarged cross-sectional view corresponding to FIG. 6 and shows a third example modification of the battery of the embodiment; and
FIG. 11 is a partial enlarged cross-sectional view corresponding to FIG. 6 and shows a fourth example modification of the battery of the embodiment.

### DETAILED DESCRIPTION

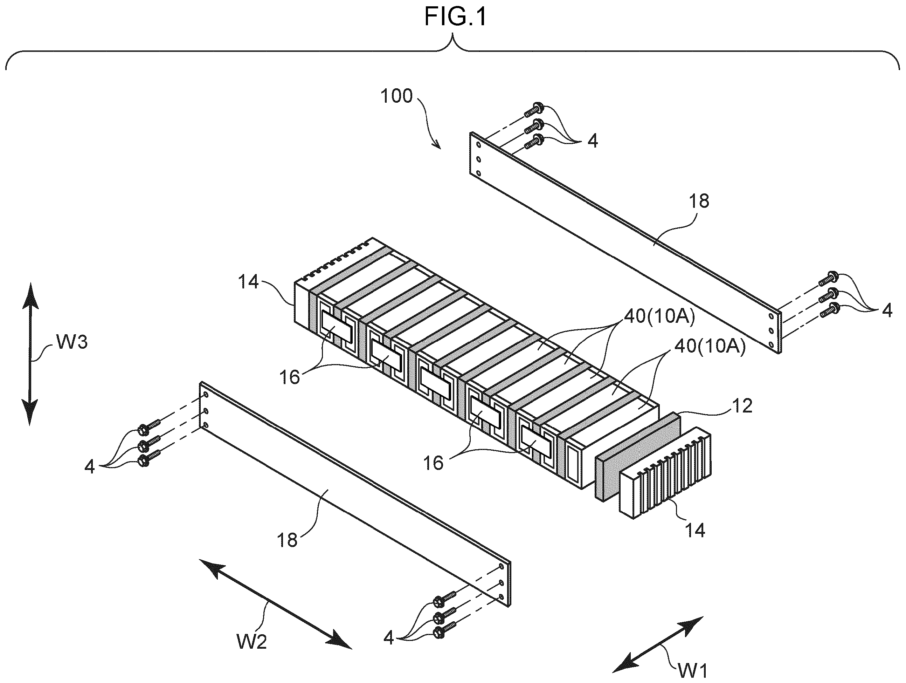

A battery module 100 pertaining to an embodiment and a battery 10A included in the battery module 100 will be described below based on FIG. 1 to FIG. 7D. It will be noted that arrow W1 appropriately shown in the drawings indicates a first direction, arrow W2 indicates a second direction, and arrow W3 indicates a third direction. The first direction, the second direction, and the third direction are mutually orthogonal directions. Furthermore, in the embodiment, the first direction W1 coincides with the width direction of the battery 10A. The second direction W2 coincides with the thickness direction of the battery 10A. The third direction W3 coincides with the height direction of the battery 10A.

It will be noted that unless otherwise specified in the specification, the number of each element is not limited to one and may be plural. Furthermore, in the drawings, substantially identical elements are assigned identical reference numerals, and redundant description in the specification will be omitted.

Furthermore, in this specification, the term "step" includes not only a step independent of other steps but also a step that cannot be clearly distinguished from another step as long as the intended object of that step is achieved. Furthermore, unless otherwise specified in this specification, the expression "projects in a direction" shall include both a case where something projects in a certain direction and a case where something projects in a different direction that is inclined at a predetermined angle relative to the certain direction.

### (Battery Module)

FIG. 1 is a partial exploded perspective view of the battery module 100. As shown in FIG. 1, the battery module 100 is configured to include a plurality of batteries 10A, elastic bodies 12 disposed between the batteries 10A, and a pair of restraining members 14.

The plural batteries 10A are arranged along the second direction W2 in an attitude in which their width direction coincides with the first direction W1 and their thickness direction coincides with the second direction W2. The plural batteries 10A are, for example, lithium-ion secondary batteries and are electrically interconnected via busbars 16. Each battery 10A has a battery case 40 serving as an exterior casing member and an electrode laminate 20 that is housed inside the battery case 40. The battery case 40 and the electrode laminate 20 will be described in detail further below.

Owing to the plural batteries 10A, plural battery cases 40 are arranged in the second direction W2 in the battery module 100. Furthermore, the elastic bodies 12, which are plate-like or sheet-like, are disposed between the battery cases 40.

The elastic bodies 12 are, as an example, each formed in the shape of a rectangular plate whose thickness direction coincides with the second direction W2. The elastic bodies 12 configure buffer members that absorb expansion and contraction of the batteries 10A when the batteries 10A are charged and discharged. The material of the elastic bodies 12 is not particularly limited, and known materials such as resin and silicone can be appropriately selected. The elastic bodies 12 may be configured by one type of these materials or may be configured by combining two or more types of materials in layers. The elastic bodies 12 are preferably insulating bodies to prevent short circuits between the batteries 10A. Furthermore, the material of the elastic bodies 12 preferably has an excellent heat insulation property to prevent thermal propagation between the batteries 10A when an abnormality occurs. Examples of heat insulating members having an excellent heat insulation property include urethane and foamable silicone, and the foamable silicone are more preferably, which performs as an elastic body and a heat insulating member. The elastic bodies 12 of this embodiment are, as an example, formed of foamable silicone.

It will be noted that the dimension of the elastic bodies 12 in their width direction (the second direction W2) is set shorter than the dimension of the batteries 10A in their width direction (the second direction W2), and the elastic bodies 12 are disposed in positions apart from the width direction end portions of the battery cases 40. When configuring the battery module 100, the elastic bodies 12 and projecting portions 50 of the battery cases 40 described later do not interfere with each other.

The pair of restraining members 14 are also called end plates and are disposed on both sides in the second direction W2 of a stack in which the plural batteries 10A and the elastic bodies 12 are stacked together. The pair of restraining members 14 are rectangular plate-like members whose width direction coincides with the first direction W1 and whose thickness direction coincides with the second direction W2. The pair of restraining members 14 are, for example, formed of resin or metal. The pair of restraining members 14 are intercoupled by a pair of side plates 18 that extend in the second direction W2.

The pair of side plates 18 are, for example, disposed on both sides in the first direction W1 of a stack in which the plural batteries 10A, the elastic bodies 12, and the pair of restraining members 14 are stacked together. The pair of side plates 18 are members that intercouple the pair of restraining members 14 in the second direction W2, and both end portions of the side plates 18 in the second direction W2 are fastened to the pair of restraining members 14 by fastening members 4 such as bolts.

Because of the above configuration, in the battery module 100, the plural battery cases 40 arranged in the second direction W2 are restrained from both sides in the second direction W2 by the pair of restraining members 14. A predetermined restraining pressure is applied in the second direction W2 to each battery case 40. The detailed configuration of the batteries 10A will now be described below.

### (Battery)

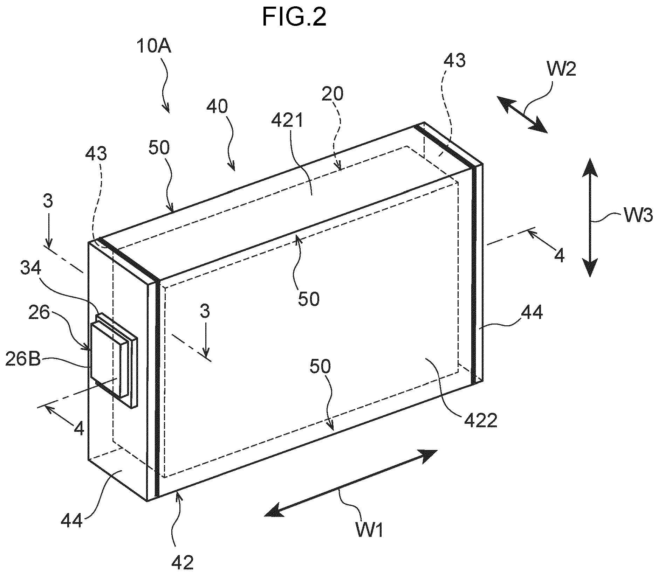

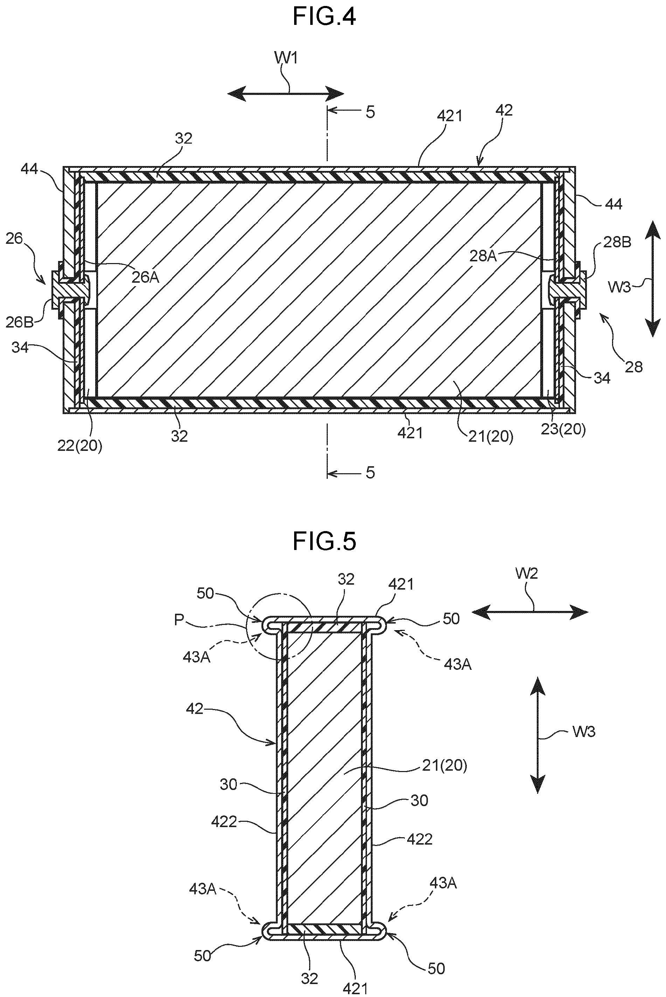

FIG. 2 is a perspective view of the battery 10A pertaining to the embodiment. FIG. 4 is a cross-sectional view of the battery case 40 schematically showing a state in which the battery case 40 is cut along line 4-4 of FIG. 2. As shown in FIG. 2, the battery 10A is configured to include an electrode laminate 20, which configures a positive pole and a negative pole, and the battery case 40, which houses the electrode laminate 20.

### (Electrode Laminate)

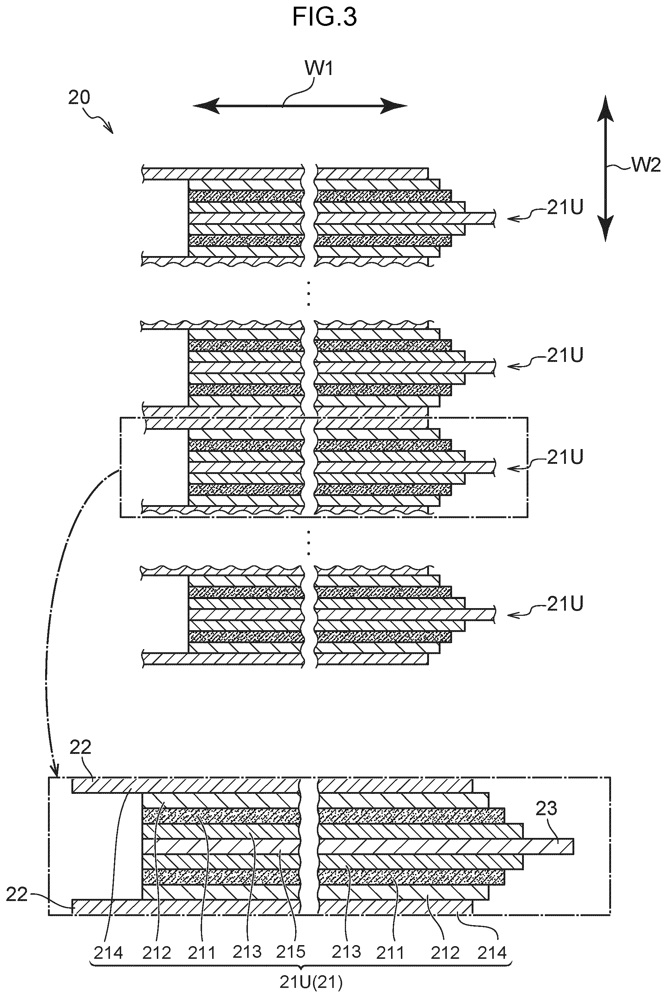

FIG. 3 is a cross-sectional view of the electrode laminate 20 schematically showing a state in which the electrode laminate 20 is cut along line 3-3 of FIG. 2. As shown in FIG. 3, the electrode laminate 20 has an electrode body 21, a plurality of positive electrode current collector tabs 22, and a plurality of negative electrode current collector tabs 23. The electrode body 21 includes a plurality of unit electrode bodies 21U. The plural unit electrode bodies 21U are laminated along the second direction W2. The plural unit electrode bodies 21U are electrically connected in parallel.

The electrode body 21 is, as an example, formed in the shape of a rectangular plate whose width direction coincides with the first direction W1 and whose thickness direction coincides with the second direction W2. The plural positive electrode current collector tabs 22 project from one side of the electrode body 21 in the first direction W1. The plural negative electrode current collector tabs 23 project from the other side of the electrode body 21 in the first direction W1.

The laminate structure of the unit electrode bodies 21U is a monopolar structure. Specifically, each unit electrode body 21U has two solid electrolyte layers 211, two positive electrode active material layers 212, two negative electrode active material layers 213, two positive electrode current collectors 214, and one negative electrode current collector 215. The positive electrode current collector 214, the positive electrode active material layer 212, the solid electrolyte layer 211, the negative electrode active material layer 213, the negative electrode current collector 215, the negative electrode active material layer 213, the solid electrolyte layer 211, the positive electrode active material layer 212, and the positive electrode current collector 214 are laminated in this order along the second direction W2.

One positive electrode current collector tab 22 is connected to one positive electrode current collector 214. One negative electrode current collector tab 23 is connected to one negative electrode current collector 215. The number of the positive electrode current collector tabs 22 of the electrode laminate 20 is greater than the number of the negative electrode current collector tabs 23 of the electrode laminate 20.

The solid electrolyte layers 211 include a solid electrolyte. The solid electrolyte is not particularly limited and may be an aggregate of plural particles. The solid electrolyte preferably includes one selected from the group comprising sulfide solid electrolytes, oxide solid electrolytes, and halide solid electrolytes. The solid electrolyte may be a known solid electrolyte.

The solid electrolyte may further include a binder. The binder may be used for binding together the solid electrolyte. The binder may be used for binding the solid electrolyte and the positive electrode active material layers 212 or the negative electrode active material layers 213. Examples of the binder include vinyl halide resins (e.g., polyvinylidene fluoride (PVdF)), rubbers (e.g., acrylate-butadiene rubber (ABR) or styrenebutadiene rubber (SBR)), or polyolefin resins (e.g., polyethylene (PE) or polypropylene (PP)).

The positive electrode active material layers 212 contain a positive electrode active material. The positive electrode active material layers 212 may also contain at least one of a solid electrolyte for a positive electrode, a conductive additive, and a binder as needed.

The positive electrode active material layers 212 preferably include a lithium complex oxide as the positive electrode active material. The lithium complex oxide may contain at least one type selected from the group comprising F, Cl, N, S, Br, and I. Furthermore, the lithium complex oxide may have a crystalline structure belonging to at least one space group selected from the space groups R-3m, Immm, and P63-mmc. Furthermore, the main array of the transition metal, oxygen, and lithium in the lithium complex oxide may have an O2 structure. The positive electrode active material may be a known positive electrode active material.

Examples of the solid electrolyte for a positive electrode include the same ones as those that were exemplified as the solid electrolyte included in the solid electrolyte layers.

Examples of the conductive additive include carbon materials (e.g., carbon black, carbon nanotubes, graphite, or carbon fluoride), metal materials (e.g., aluminum powder or conductive whiskers), or conductive polymer materials (e.g., polyaniline, polypyrrole, or polythiophene).

Examples of the binder include the same ones as those that were exemplified as the binder included in the solid electrolyte layers.

The negative electrode active material layers 213 contain a negative electrode active material. The negative electrode active material layers 213 may also contain at least one of a solid electrolyte for a negative electrode, a conductive additive, and a binder as needed.

Examples of the negative electrode active material include Li-based active materials (e.g., metallic lithium), carbon-based active materials (e.g., graphite), oxide-based active materials (e.g., lithium titanate), or Si-based active materials (e.g., elemental Si).

Examples of the solid electrolyte for a negative electrode include the same ones as those that were exemplified as the solid electrolyte for a positive electrode that can be used in the positive electrode active material layers.

Examples of conductive additives that can be used in the negative electrode active material layers include the same ones as those that were exemplified as conductive additives that can be used in the positive electrode active material layers.

Examples of binders that can be used in the negative electrode active material layers include the same ones that were exemplified as binders that can be used in the positive electrode active material layers.

The positive electrode current collectors 214 collect current from the positive electrode active material layers 212. The material of the positive electrode current collectors is not particularly limited, and examples thereof include stainless steel, aluminum, copper, nickel, iron, titanium, or carbon. The positive electrode current collectors may be aluminum alloy foil or aluminum foil. The aluminum alloy foil and the aluminum foil may be manufactured using powder. The shape of the positive electrode current collectors is, for example, foil-like or mesh-like. The positive electrode current collectors may have a configuration where a buffer layer, an elastic layer, or a positive temperature coefficient (PTC) thermistor layer is disposed on their surfaces.

The negative electrode current collector 215 collects current from the negative electrode active material layers 213. The material of the negative electrode current collector is not particularly limited, and examples thereof include stainless steel, aluminum, copper, nickel, iron, titanium, or carbon. The negative electrode current collector may be copper foil. The shape of the negative electrode current collector is, for example, foil-like or mesh-like. The negative electrode current collector may have a configuration where a buffer layer, an elastic layer, or a positive temperature coefficient (PTC) thermistor layer is disposed on its surface.

The positive electrode current collector tabs 22 electrically interconnect the positive electrode current collectors 214 and a positive electrode terminal 26. The positive electrode current collector tabs 22 are connected to the positive electrode current collectors 214. The positive electrode current collector tabs 22 project toward one side in the width direction (the first direction W1) of the electrode body 21. Specifically, a bundle including the plural positive electrode current collector tabs 22 is electrically connected to the positive electrode terminal 26. The positive electrode current collector tabs 22 are preferably formed continuously from the positive electrode current collectors 214. The material of the positive electrode current collector tabs is not particularly limited and may be metal (e.g., aluminum, stainless steel (SUS), or nickel).

The negative electrode current collector tabs 23 electrically interconnect the negative electrode current collectors 215 and a negative electrode terminal 28. The negative electrode current collector tabs 23 are connected to the negative electrode current collectors 215. The negative electrode current collector tabs 23 project toward the other side in the width direction (the first direction W1) of the electrode body 21. Specifically, a bundle including the plural negative electrode current collector tabs 23 is electrically connected to the negative electrode terminal 28. The negative electrode current collector tabs 23 are preferably formed continuously from the negative electrode current collectors 215. The material of the negative electrode current collector tabs is not particularly limited and may be metal (e.g., aluminum, stainless steel (SUS), or nickel).

The electrode laminate 20 having the above configuration is disposed inside the battery case 40 in a state in which a pair of resin sheets 30 serving as insulating members are disposed on both side surfaces thereof in the second direction W2 (see FIG. 5).

The material of the resin sheets includes a known resin (e.g., a thermoplastic resin or a thermosetting resin). The thermoplastic resin may be an elastomer.

The resin sheets may further contain a thermally conductive filler as needed. The material of the thermally conductive filler is not particularly limited, and examples thereof include metal oxides (e.g., alumina, silica, or magnesia), metal nitrides (e.g., aluminum nitride, silicon nitride, or boron nitride), artificial diamond, or silicon carbide.

The resin sheets may further include a compounding agent as needed. Examples of the compounding agent include fillers such as glass fiber, carbon fiber, and inorganic powder, thermostabilizers, antioxidants, pigments, weather resistant agents, flame retardants, plasticizers, dispersants, lubricants, release agents, or antistatic agents.

Furthermore, the electrode laminate 20 having the above configuration has a pair of resin fillers 32 serving as insulating members disposed on both side surfaces thereof in the third direction W3 (see FIG. 4).

Examples of the material of the resin fillers include the same ones as those that were exemplified as the material of the resin sheets 30. The material of the resin fillers may be identical to or different from the material of the resin sheets.

As the content of the thermally conductive fillers increases, thermal conductivity tends to improve and electrical insulation tends to drop. The thermal conductivity of the resin fillers 32 may be higher than that of the resin sheets 30, and the electrical insulation of the resin fillers 32 may be lower than that of the resin sheets 30.

The resin sheets 30 and the resin fillers 32 are disposed between the battery case 40 and the electrode laminate 20 in a state in which the electrode laminate 20 is housed inside the battery case 40. The battery case 40 and the electrode laminate 20 are electrically insulated by the resin sheets 30 and the resin fillers 32.

### (Battery Case)

FIG. 4 is a cross-sectional view of the battery case 40 schematically showing a state in which the battery case 40 is cut along line 4-4 of FIG. 2. As shown in FIG. 4, the battery case 40 is configured to include a case body 42 that forms a cylindrical housing and a pair of terminal wall portions 44 that seal two openings in the case body 42. The case body 42 and the pair of terminal wall portions 44 are, for example, formed by metal plates of aluminum or iron for example.

The case body 42 has a pair of short side wall portions 421 that oppose each other in the third direction W3 and a pair of long side wall portions 422 that oppose each other in the second direction W2, and rectangular open portions 43 are formed by the pair of short side wall portions 421 and the pair of long side wall portions 422. The rectangular open portions 43 configure two surfaces that oppose each other in the first direction W1 in the case body 42.

The pair of short side wall portions 421 configure the top surface and the bottom surface of the battery case 40 and extend such that their longitudinal direction coincides with the first direction W1 and their transverse direction coincides with the second direction W2. For this reason, they configure two edges on the short sides of each of the open portions 43 of the case body 42.

The pair of long side wall portions 422 configure both side surfaces (the front side and the back side), in the thickness direction, of the battery case 40 and extend such that their longitudinal direction coincides with the first direction W1 and their transverse direction coincides with the third direction W3. They configure two edges on the long sides of each of the open portions 43 of the case body 42.

The case body 42 may, for example, be formed by extruding an aluminum material or may be formed by using a forming press to bend a pair of flat plates and then welding end portions of the flat plates together to form a cylindrical housing.

In this embodiment, the inner surfaces of the short side wall portions 421 and the long side wall portions 422 opposing the electrode laminate 20 are configured by flat surfaces.

The positive electrode terminal 26 and the negative electrode terminal 28 serving as electrode terminals are disposed on the pair of terminal wall portions 44. The terminal wall portions 44 are each formed in the shape of a rectangular plate whose thickness direction coincides with the first direction W1 and have through holes (not assigned a reference sign) through which a positive electrode outside terminal 26B and a negative electrode outside terminal 28B described later are inserted.

The positive electrode terminal 26 includes a positive electrode inner terminal 26A disposed at an inner side of the battery case 40 and a positive electrode outer terminal 26B disposed at an outer side of the battery case 40. The positive electrode inner terminal 26A is formed in the shape of a rectangular plate whose thickness direction coincides with the first direction W1 and is disposed along the inner side surface of the terminal wall portion 44. The positive electrode current collector tabs 22 of the electrode laminate 20 are electrically connected to the positive electrode inner terminal 26A. Furthermore, the positive electrode inner terminal 26A has a through hole (not assigned a reference sign) through which the positive electrode outer terminal 26B is inserted.

The positive electrode outer terminal 26B is, for example, configured by a metal rivet. The positive electrode outer terminal 26B is secured by inserting it through the through holes in the terminal wall portion 44 and the positive electrode inner terminal 26A, and deforming an axial direction end portion of the positive electrode outer terminal 26B. In other words, the positive electrode outer terminal 26B is secured by swaging to the terminal wall portion 44 and the positive electrode inner terminal 26A.

Furthermore, an insulating member 34 is interposed between the terminal wall portion 44 of the battery case 40 and the positive electrode terminal 26 to electrically insulate the battery case 40 and the positive electrode terminal 26.

The negative electrode terminal 28 includes a negative electrode inner terminal 28A disposed at an inner side of the battery case 40 and a negative electrode outside terminal 28B disposed at an outer side of the battery case 40. The negative electrode current collector tabs 23 of the electrode laminate 20 are electrically connected to the negative electrode inner terminal 28A. The configuration of the negative electrode terminal 28 is identical to the configuration of the positive electrode terminal 26, so detailed description will be omitted.

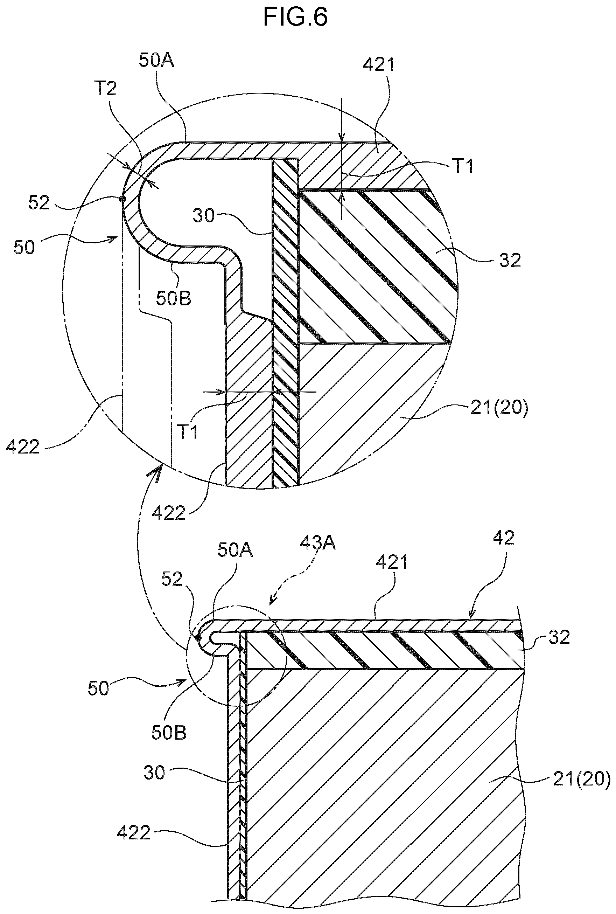

Here, FIG. 5 is a cross-sectional view of the battery case 40 schematically showing a state in which the battery case 40 is cut along line 5-5 of FIG. 4. Furthermore, FIG. 6 is a partial enlarged cross-sectional view showing an enlargement of a region P indicated by the long dashed short dashed line in FIG. 5.

### (Projecting Portions)

As shown in FIG. 5 and FIG. 6, in the battery case 40, projecting portions 50 that project toward an outer side of the battery case 40 are formed in corner portions 43A of the open portions 43. The projecting portions 50 are formed by bending at least one of the short side wall portions 421 and the long side wall portions 422 and, as described later, are formed by pressing the case body 42 of the battery case 40.

As shown in FIG. 6, the projecting portions 50 may, as an example, project in the second direction W2 from the long side wall portions 422 of the battery case 40. That is, the projecting portions 50 may project in the lamination direction of the electrode laminate 20. The projecting portions 50 are formed by bending, in substantial U-shapes that project in the second direction W2, the end portions of the long side wall portions 422 corresponding to the corner portions 43A. The projecting portions 50 configure flat surfaces together with the short side wall portions 421 of the case body 42. Furthermore, the projecting portions 50 are integrally formed by bending, in substantial right angles, the end portions of the long side wall portions 422 of the case body 42. The restrainment of the electrode laminate housed inside the battery case 40 can be improved in the lamination direction.

More specifically, the projecting portions 50 have first side surfaces 50A, which are provided on one side of crown portions 52 and are continuous with the short side wall portions 421 of the case body 42, and second side surfaces 50B, which are provided on the other side of the crown portions 52 and are continuous with the long side wall portions 422 of the case body 42. In this embodiment, the angle formed by the first side surfaces 50A and the lamination direction of the electrode laminate 20 (the second direction W2) is 0°. Furthermore, the angle formed by the second side surfaces 50B and the lamination direction of the electrode laminate 20 is also 0°. In other words, the projecting portions 50 project parallel to the lamination direction of the electrode laminate 20.

Furthermore, as shown in the partially enlarged view in FIG. 6, a thickness T2 of the projecting portions 50 is configured to be smaller than a thickness T1 of the other parts of the short side wall portions 421 and the long side wall portions 422. When bending the case body 42 by pressing, bending of the projecting portions 50 can be more easily performed than bending of the other parts of the short side wall portions 421 and the long side wall portions 422.

Here, in FIG. 6, the outline of the case body 42 before forming the projecting portions 50 is indicated by long dashed double-short dashed lines. As shown in FIG. 6, in the case body 42, the cross-sectional area of the open portions 43 is, in a state before the projecting portions 50 are formed, designed to be sufficiently greater than the cross-sectional area of a cross-section obtained by cutting the electrode laminate 20 (the electrode body 21) along the second direction W2. In other words, in a state prior to the formation of the projecting portions 50, extra-length parts are provided on the outer peripheries of the open portions 43. Consequently, when inserting the electrode laminate 20 inside the case body 42 in this state, interference between the case body 42 and the electrode laminate 20 is inhibited.

As indicated by the solid lines in FIG. 6, in a state in which the projecting portions 50 have been formed in the corner portions 43A of the open portions 43, the extra-length parts on the outer peripheries of the open portions 43 disappear, and the gaps between the side wall portions of the case body 42 and the electrode laminate 20 are reduced. The electrode laminate 20 is well restrained inside the battery case 40.

Particularly in a case where the electrolyte layers are configured to include a solid electrolyte as in the electrode laminate 20 of this embodiment, the configuration of this embodiment can be more beneficial in terms of improving the ability to restrain the electrode laminate 20 inside the battery case 40. In other words, it is known that when electrolyte layers are configured to include a solid electrolyte, the amount of expansion and contraction of the battery when the battery is charged and discharged is small compared with a secondary battery that uses a liquid electrolyte. Consequently, if the dimensional tolerance of the battery case is decided with priority given to the insertability of the electrode laminate 20, the gaps between the side wall portions of the case body and the electrode laminate increase, which may lead to the case that positional shifting inside the battery case may occur. In contrast, in this embodiment, when inserting the electrode laminate 20, the dimensional tolerance of the case body 42 (the extra-length parts) can be increased, and after inserting the electrode laminate 20, the dimensional tolerance of the case body 42 (the extra-length parts) can be reduced. The ability to restrain the electrode laminate inside the battery case in an all-solid-state battery can be effectively improved.

### [Battery Manufacturing Method]

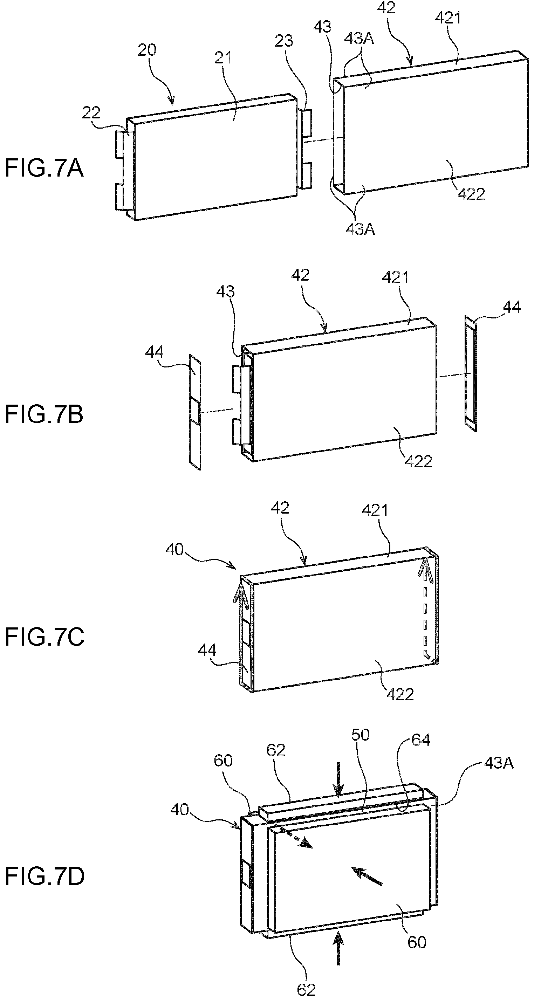

A battery manufacturing method pertaining to this embodiment will now be described below with reference to FIG. 7. The battery manufacturing method pertaining to this embodiment is, for example, a method of manufacturing the battery 10A. The battery manufacturing method includes a preparation step, an insertion step, a resin filling step, a terminal connection step, a sealing step, and a pressing step.

### (Preparation Step)

The preparation step is a step of attaching the pair of resin sheets 30 to both side surfaces of the electrode laminate 20 in the second direction W2. The method of attaching the resin sheets 30 is not particularly limited and may be any known method.

### (Insertion Step)

The insertion step is a step of inserting the electrode laminate 30 into the case body 42 through the open portions 43 (FIG. 7A). Since this step is implemented before forming the projecting portions 50 at the case body 42, the electrode laminate 20 is inserted into the case body 42 through the open portions 43 which do not have the projecting portions 50.

### (Resin Filling Step)

The resin filling step is a step of filling the gaps between the short side wall portions 421 of the case body 42 and the electrode laminate 20 with an unsolidified form of the resin fillers 32 to form the resin fillers 32. The method of filling the gaps with the resin fillers 32 is not particularly limited and may be any known method. The method of solidifying the unsolidified form of the resin fillers 32 is appropriately selected in accordance with the type of the resin.

### (Terminal Connection Step)

The terminal connection step is a step of interconnecting the plural positive electrode current collector tabs 22 and the positive electrode terminal 26 and interconnecting the plural negative electrode current collector tabs 23 and the negative electrode terminal 28 (FIG. 7B). Specifically, the positive electrode current collector tabs 22 are connected to the positive electrode inner terminal 26A, and the negative electrode current collector tabs 23 are connected to the negative electrode inner terminal 28A. The connection method is not particularly limited and may be any known method. In this embodiment, the connection is performed by welding.

In this step, the positive electrode outer terminal 26B and the negative electrode outer terminal 28B are connected to the positive electrode current collector tabs 22 and the negative electrode current collector tabs 23, respectively, together with the insulating members 34.

### (Sealing Step)

The sealing step is a step of attaching the pair of terminal wall portions 44 to the open portions 43 of the case body 42 to seal the open portions 43 (FIG. 7C). The sealing method is not particularly limited and may be any known method. In this embodiment, the sealing is performed by welding.

### (Pressing Step)

The pressing step is a step of pressing the battery case 40 to form the projecting portions 50 at the corner portions 43A of the open portions 43. This step can be implemented by a method in which both thickness direction (second direction W2) sides of the battery case 40 are pressed by first molds 60 and both height direction (third direction W3) sides of the battery case 40 are pressed by second molds 62. At this time, gaps 64 between the first molds 60 and the second molds 62 are provided at positions corresponding to the corner portions 43A of the battery case 40. In this state, when the battery case 40 is pressed in the thickness direction and in the height direction, the extra-length parts on the outer peripheries of the open portions 43 gather at the gaps 64, so the projecting portions 50 corresponding to the shapes of the gaps 64 are formed.

### (Action and Effects)

As described above, the battery 10A pertaining to this embodiment includes the battery case 40 in which the rectangular open portions 43 are formed by the pair of short side wall portions 421 and the pair of long side wall portions 422, and the electrode laminate 20 is housed inside the battery case 40. The projecting portions 50 formed by bending at least one of the short side wall portions 421 and the long side wall portions 422 are formed at the corner portions 43A of the open portions 43. Furthermore, the projecting portions 50 have a shape in which they project toward an outer side of the battery case 40. In other words, according to this configuration, the open portions 43 of the battery case 40 have, beforehand, extra-length parts for forming the projecting portions 50 at the positions of the corner portions 43A of the battery case 40. As shown in FIG. 7B, in the step of inserting the electrode laminate 20 into the case body 42 through the open portions 43 of the case body 42 during manufacture, interference between the open portions 43 of the case body 42 and the electrode laminate 20 is inhibited by the extra-length parts that are prepared prior to the formation of the projecting portions 50. The insertability of the electrode laminate 20 into the battery case 40 can be improved. Furthermore, in a state in which the electrode laminate 20 is housed inside the battery case 40 and the projecting portions 50 have been formed at the corner portions 43A of the open portions 43, the extra-length parts disappear and the gaps between the side wall portions of the battery case 40 and the electrode laminate 20 are reduced. Positional shifting of the electrode laminate 20 housed inside the battery case 40 can be inhibited.

Furthermore, in the battery case 40, the inner surfaces of the short side wall portions 421 and the long side wall portions 422 opposing the electrode laminate 20 are configured by flat surfaces. In a state in which the battery case 40 has the projecting portions 50 and the gaps between the side wall portions of the battery case 40 and the electrode laminate 20 have been reduced, the surfaces of the electrode laminate 20 abut against the flat surfaces so that the restraining force is dispersed. Localized restraining force is inhibited from acting on the surfaces of the electrode laminate 20.

Furthermore, the projecting portions 50 formed at the battery case 40 project in the lamination direction of the electrode laminate 20 (the second direction W2). The restrainment of the electrode laminate 20 housed inside the battery case 40 can be improved in the lamination direction.

Furthermore, as shown in FIG. 6, the thickness T2 of the projecting portions 50 is configured to be smaller than the thickness T1 of the other parts of the short side wall portions 421 and the long side wall portions 422 of the battery case 40. The bending of the side wall portions when forming the projecting portions can be facilitated compared with a case where the thickness of the projecting portions is configured to be the same thickness as the other parts of the side wall portions of the battery case 40.

Furthermore, when the battery module 100 is configured by a plurality of the batteries 10A, the battery module 100 is configured to include a plurality of the battery cases 40 arranged in the second direction W2 (single direction), the elastic bodies 12 disposed between the battery cases 40, and the pair of restraining members 14 that restrain the plural battery cases 40 from both sides in the second direction W2. Expansion and contraction when the batteries 10A are charged and discharged can be absorbed by deformation of the elastic bodies 12 (FIG. 1).

The plural battery cases 40 are arranged in the second direction W2 such that one long side wall portion 422 of each of the battery cases 40 opposes the other long side wall portion 422 of the adjacent battery case 40. In other words, the restraining pressure applied from the pair of restraining members 14 is input to the plural battery cases 40 via the long side wall portions 422 that are large-area parts of the battery cases 40. In this configuration, the case bodies 42 of the battery cases 40 have the projecting portions 50 that project toward an outer side of the battery cases 40 at the corner portions 43A of the open portions 43, so the gaps between the long side wall portions 422 and the electrode laminates 20 are reduced. The restraining pressure is effectively applied from the restraining members 14 to the electrode laminates 20.

An embodiment of the present disclosure has been described above, but the disclosure is not limited to the configuration of the above embodiment. For example, the shape of the projecting portions formed at the corner portions of the battery case 40 is not limited to that of the configuration of the above embodiment. Below, several example modifications applicable to the above embodiment will be enumerated and described. It will be noted that in each of the example modifications, constituent parts identical to those of the above embodiment will be assigned identical reference signs, and description thereof will be omitted.

### (First Example Modification)

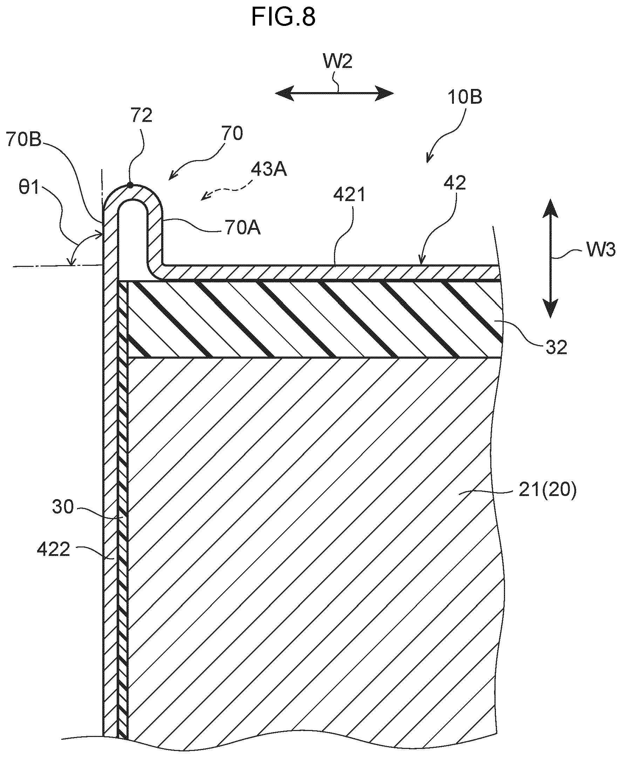

A battery 10B pertaining to a first example modification will now be described with reference to FIG. 8. FIG. 8 is a partial enlarged cross-sectional view corresponding to FIG. 6 and shows an enlargement of the cross-section of a corner portion 43A of the battery case 40. As shown in FIG. 8, a projecting portion 70 is formed at the corner portion 43A of the open portion 43 of the battery case 40, and the projecting portion 70 projects in a direction (the third direction W3) perpendicular to the lamination direction of the electrode laminate 20. The projecting portion 70 is formed by bending, in a substantial U-shape that projects in the third direction W3, the end portion of the short side wall portion 421 corresponding to the corner portion 43A. The projecting portion 70 configures a flat surface together with the long side wall portion 422 of the case body 42. Furthermore, the projecting portion 70 is integrally formed by bending, in a substantial right angle, the end portion of the short side wall portion 421 of the case body 42.

More specifically, the projecting portion 70 has a first side surface 70A, which is provided on one side of a crown portion 72 and is continuous with the short side wall portion 421 of the case body 42, and a second side surface 70B, which is provided on the other side of the crown portion 72 and is continuous with the long side wall portion 422 of the case body 42. The angle formed by first side surface 70A and the lamination direction of the electrode laminate 20 (the second direction W2) is 90°. Furthermore, an angle θ1 formed by the second side surface 70B and the lamination direction of the electrode laminate 20 is also 90°. The projecting portion 70 projects parallel to a direction perpendicular to the lamination direction of the electrode laminate 20.

The battery 10B pertaining to the first example modification basically follows the configuration of the battery 10A pertaining to the above embodiment, so the same action and effects can be obtained. Furthermore, in this example modification, the projecting portion 70 formed in the battery case 40 projects in a direction (the third direction W3) perpendicular to the lamination direction of the electrode laminate 20. The restrainment of the electrode laminate 20 housed inside the battery case 40 can be improved in a direction perpendicular to the lamination direction.

### (Second Example Modification)

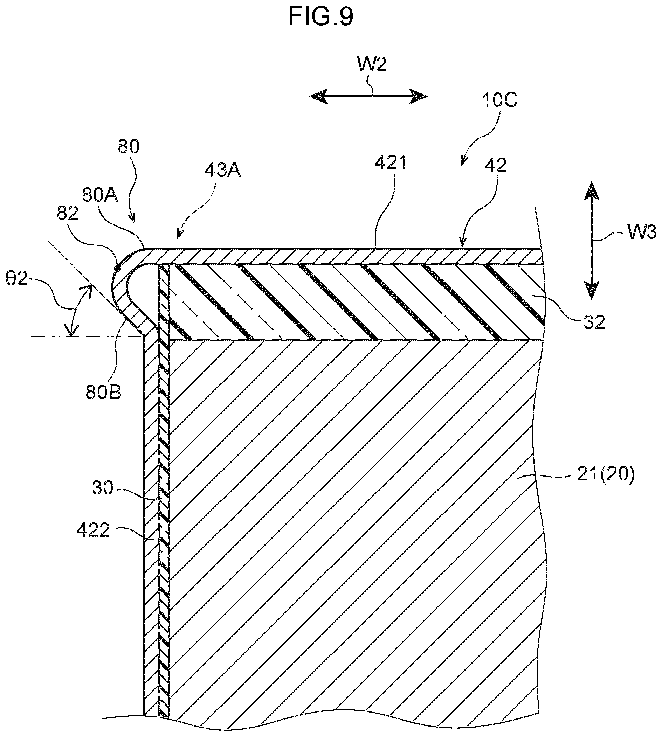

A battery 10C pertaining to a second example modification will now be described with reference to FIG. 9. FIG. 9 is a partial enlarged cross-sectional view corresponding to FIG. 6 and shows an enlargement of the cross-section of a corner portion 43A of the battery case 40. As shown in FIG. 9, a projecting portion 80 is formed at the corner portion 43A of the open portion 43 of the battery case 40, and the projecting portion 80 projects in a direction that forms a predetermined angle with the lamination direction of the electrode laminate 20. The angle formed by the projecting direction of the projecting portion 80 and the lamination direction of the electrode laminate 20 is preferably set in the range of 25° to 70° and, in this example modification, is set to 45° as an example.

The projecting portion 80 projects in the lamination direction of the electrode laminate 20 (the second direction W2). The projecting portion 80 is formed by bending, in a substantial U-shape that projects in the second direction W2, the end portion of the long side wall portion 422 corresponding to the corner portion 43A. Because of this, the projecting portion 80 configures a flat surface together with the short side wall portion 421 of the case body 42. Furthermore, the projecting portion 80 is integrally formed by bending, in an angle corresponding to the projecting direction of the projecting portion 80, the end portion of the long side wall portion 422 of the case body 42.

More specifically, the projecting portion 80 has a first side surface 80A, which is provided on one side of a crown portion 82 and is continuous with the short side wall portion 421 of the case body 42, and a second side surface 80B, which is provided on the other side of the crown portion 82 and is continuous with the long side wall portion 422 of the case body 42. The angle formed by the first side surface 80A and the lamination direction of the electrode laminate 20 (the second direction W2) is 0°. Meanwhile, an angle θ2 formed by the second side surface 80B and the lamination direction of the electrode laminate 20 is 45°. Because of this, the projecting portion 80 projects in a direction that forms a 45° angle relative to the lamination direction of the electrode laminate 20.

The battery 10C pertaining to the second example modification basically follows the configuration of the battery 10A pertaining to the above embodiment, so the same action and effects can be obtained. Furthermore, the second side surface 80B of the projecting portion 80 projects in a direction that forms an angle in the range of 25° to 70° with respect to the lamination direction of the electrode laminate 20. The amount that the projecting portion projects in the lamination direction is reduced compared with a configuration where the projecting portion projects parallel to the lamination direction. The dimension of the battery case can be reduced in the lamination direction (the second direction W2), and a reduction in size can be achieved.

### (Third Example Modification)

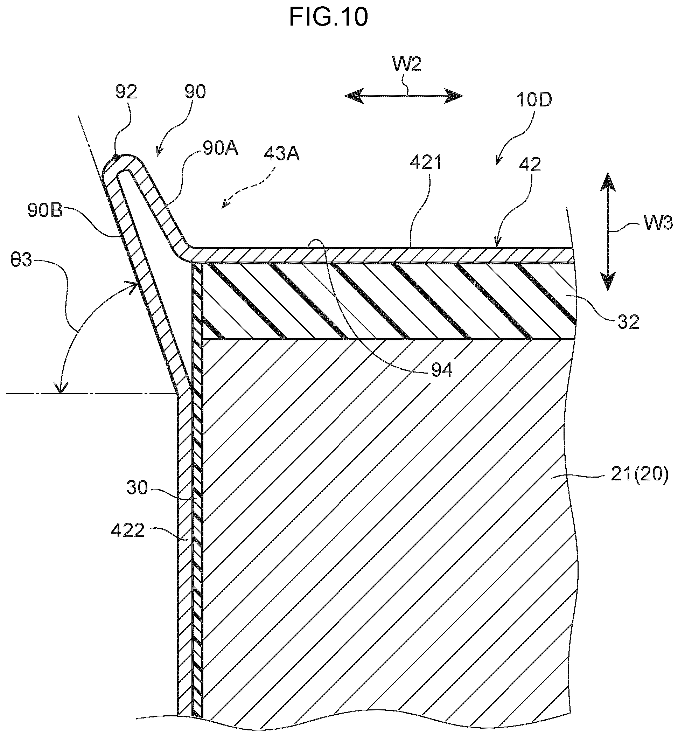

A battery 10D pertaining to a third example modification will now be described with reference to FIG. 10. FIG. 10 is a partial enlarged cross-sectional view corresponding to FIG. 6 and shows an enlargement of the cross-section of a corner portion 43A of the battery case 40. As shown in FIG. 10, a projecting portion 90 is formed at the corner portion 43A of the open portion 43 of the battery case 40, and the projecting portion 90 projects in a direction that forms a predetermined angle with the lamination direction of the electrode laminate 20. The angle formed by the projecting direction of the projecting portion 90 and the lamination direction of the electrode laminate 20 is preferably set in the range of 25° to 70° and, in this example modification, is set at 70° as an example.

The projecting portion 90 projects in the lamination direction of the electrode laminate 20 (the second direction W2) and a direction (the third direction W3) perpendicular to the lamination direction. The projecting portion 90 is formed by bending, in a substantial U-shape that projects in the second direction W2 and the third direction W3, the end portions of the long side wall portion 422 and the short side wall portion 421 corresponding to the corner portion 43A. In the short side wall portion 421 of the case body 42, a recessed portion 94 that is recessed in a direction perpendicular to the lamination direction is formed adjacent to the projecting portion 90. Furthermore, the projecting portion 90 is integrally formed by bending, in an angle corresponding to the projecting direction of the projecting portion 90, the end portion of the long side wall portion 422 of the case body 42.

More specifically, the projecting portion 90 has a first side surface 90A, which is provided on one side of a crown portion 92 and is continuous with the short side wall portion 421 of the case body 42, and a second side surface 90B, which is provided on the other side of the crown portion 92 and is continuous with the long side wall portion 422 of the case body 42. The first side surface 90A, together with the short side wall portion 421, configures the recessed portion 94. The second side surface 90B is inclined in a direction that forms an angle θ3, 70° with respect to the lamination direction of the electrode laminate 20. The projecting portion 90 projects in a direction that forms a 70° angle relative to the lamination direction of the electrode laminate 20.

The battery 10D pertaining to the third example modification basically follows the configurations of the batteries 10A, 10C pertaining to the above embodiment and the second example modification, so the same action and effects can be obtained. Furthermore, in this example modification, the recessed portion 94 that is recessed in a direction (the third direction W3) perpendicular to the lamination direction is formed adjacent to the projecting portion 90 that projects in the lamination direction. An extra length on the outer periphery can be sufficiently ensured in the open portion 43 of the battery case 40, prior to forming projecting portion 90, compared with a configuration that does not have the recessed portion 94. The insertability of the electrode laminate 20 into the battery case 40 can be further improved.

### (Fourth Example Modification)

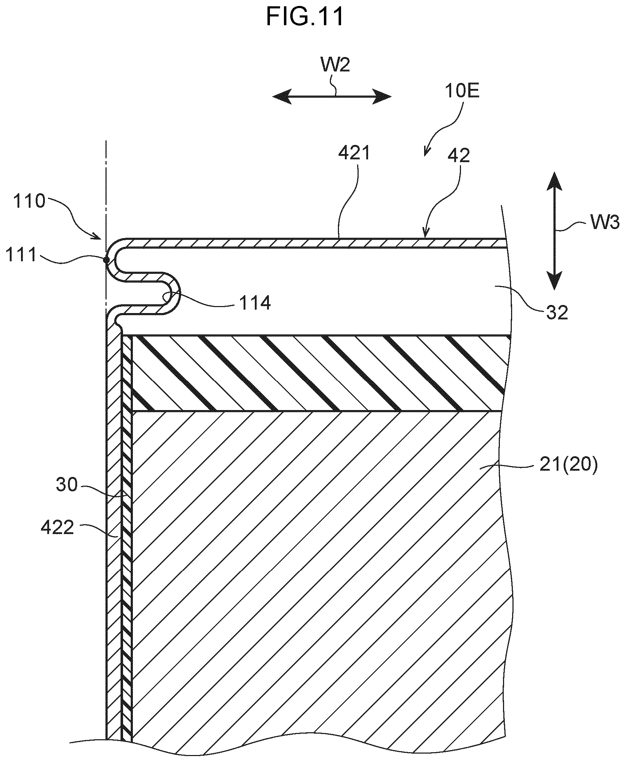

A battery 10E pertaining to a fourth example modification will now be described with reference to FIG. 11. FIG. 11 is a partial enlarged cross-sectional view corresponding to FIG. 6 and shows an enlargement of the cross-section of a corner portion 43A of the battery case 40. As shown in FIG. 11, a projecting portion 110 is formed at the corner portion 43A of the open portion 43 of the battery case 40, and the projecting portion 110, like the projecting portion 50 of the above embodiment, projects parallel to the lamination direction of the electrode laminate 20.

In the long side wall portion 422 of the case body 42, a recessed portion 114 that is recessed in the lamination direction (the second direction W2) is formed adjacent to the projecting portion 110. Furthermore, because of this, a crown portion 111 of the projecting portion 110 is disposed in a position in which it does not project in the second direction W2 relative to the long side wall portion 422.

The projecting portion 110 is formed by bending, in a substantial U-shape that projects in the second direction W2, the end portion of the long side wall portion 422 corresponding to the corner portion 43A. The recessed portion 114 is provided between the projecting portion 110 and the long side wall portion 422 and is formed by bending, in a substantial U-shape that is recessed in the second direction W2, the end portion of the long side wall portion 422. The projecting portion 110 configures a flat surface together with the short side wall portion 421 of the case body 42. Furthermore, the projecting portion 110 is, together with the recessed portion 114, integrally formed by bending, in a substantial S-shape, the end portion of the long side wall portion 422 of the case body 42.

The battery 10E pertaining to the fourth example modification basically follows the configuration of the above embodiment, so the same action and effects can be obtained. Furthermore, the recessed portion 114 that is recessed in the lamination direction is formed adjacent to the projecting portion 110 that projects in the lamination direction. An extra length on the outer periphery can be sufficiently ensured in the open portion 43 of the case body 42, prior to forming the projecting portion 110, compared with a configuration that does not have the recessed portion 114. The insertability of the electrode laminate into the battery case 40 can be further improved.

Moreover, in this example modification, by forming the recessed portion 114, the crown portion 111 of the projecting portion 110 is disposed in a position in which it does not project in the second direction W2 relative to the long side wall portion 422. The dimension of the battery case 40 can be reduced in the lamination direction (the second direction W2), and a reduction in size can be achieved.

### [Supplemental Description]

Although an embodiment of the present disclosure and several example modifications have been described above, substitutions and changes may be made to configurations thereof without departing from the scope of the disclosure. Furthermore, the configurations of the embodiment and the example modifications can also be combined and applied.

In the above embodiment and the example modifications, the electrolyte layers of the electrode laminate were described as being configured to include a solid electrolyte, but the disclosure is not limited to this, and the configuration of the disclosure may also be applied to a battery including a liquid electrolyte in the electrolyte layers.

## Claims

1. A battery (10A, 10B, 10C, 10D, 10E), comprising a battery case (40) in which an electrode laminate (20) is housed and in which a rectangular opening (43) is formed by a pair of short side wall portions (421) and a pair of long side wall portions (422) of the battery case (40), wherein:
at a corner portion (43A) of the opening (40), at least one of the short side wall portions (421) or the long side wall portions (422) is bent, forming a projecting portion (50, 70, 80, 90, 110) that projects toward an outer side of the battery case (40).

2. The battery(10A, 10B, 10C, 10D, 10E) of claim 1, wherein inner surfaces of the short side wall portions (421) and the long side wall portions (422) that oppose the electrode laminate (20) are configured by flat surfaces.

3. The battery (10A, 10C, 10D, 10E) of claim 1, wherein the projecting portion (50, 80, 110) projects in a lamination direction of the electrode laminate (20).

4. The battery (10B) of claim 1, wherein the projecting portion (70) projects in a direction perpendicular to a lamination direction of the electrode laminate (20).

5. The battery (10D) of claim 1, wherein the projecting portion (90) projects in a direction that forms an angle in a range of 25° to 70° with respect to a lamination direction of the electrode laminate (20).

6. The battery (10D) of claim 3, wherein, in the battery case (40), a recessed portion (94) that is recessed in a direction perpendicular to the lamination direction is formed adjacent to the projecting portion (90).

7. The battery (10E) of claim 3, wherein, in the battery case (40), a recessed portion (114) that is recessed in the lamination direction is formed adjacent to the projecting portion (110).

8. The battery (10A, 10E) of claim 1, wherein a wall thickness of the projecting portion (50, 110) is smaller than a wall thickness of other parts of the short side wall portions (421) and the long side wall portions (422).

9. A battery module (100), comprising a plurality of the batteries (10A, 10B, 10C, 10D, 10E) of claim 1, the battery module (100) comprising:
a plurality of the battery cases (40) arranged in one direction;
elastic bodies (12) disposed between the battery cases (40); and
a pair of restraining members (14) that restrain the plural battery cases (40) from both sides in the one direction,
wherein the plurality of battery cases (40) are arranged such that one of the long side wall portions (422) of each of the battery cases (40) opposes another of the long side wall portions (422) of the adjacent battery case (40).

10. A method of manufacturing a battery (10A, 10B, 10C, 10D, 10E) including a battery case (40) in which an electrode laminate (20) is housed and in which a rectangular opening (43) is formed by a pair of short side wall portions (421) and a pair of long side wall portions (422) of the battery case (40), the method comprising:
inserting the electrode laminate (20) through the opening (43); and
pressing the battery case (40), bending at least one of the short side wall portions (421) or the long side wall portions (422), and forming a projecting portion (50, 70, 80, 90, 110) at a corner portion of the opening (43), the projecting portion (50, 70, 80, 90, 110) projecting toward an outer side of the battery case (40).
